# EUROPÄISCHE PATENTSCHRIFT

(11) **EP 3 011 219 B1**
(45) Veröffentlichungstag und Bekanntmachung des Hinweises auf die Patenterteilung: **05.08.2020**
(21) Anmeldenummer: 14733516.0
(22) Anmeldetag: 04.06.2014
(51) Int. Cl.: F16L 55/32

(54) **MOLCHSEGMENT UND MOLCH**
PIG SEGMENT AND PIG
SEGMENT D'ÉCOUVILLON ET ÉCOUVILLON

(30) Priorität: 19.06.2013 DE 102013106424
(43) Veröffentlichungstag der Anmeldung: 27.04.2016
(73) Patentinhaber: Rosen Swiss AG, 6370 Stans (CH)
(72) Erfinder: SCHALLER, Daniel, CH-6004 Luzern (CH); FILIPPOVITCH, Sergei, Richmond Hill, Ontario (CA); VOGLER, Daniel, 6078 Lungern (CH); FIELERS, Frank, 49808 Lingen (DE)
(74) Vertreter: Busse & Busse
(86) Internationale Anmeldenummer: PCT/EP2014/001502
(87) Internationale Veröffentlichungsnummer: WO 2014/202186

(56) Entgegenhaltungen:
- WO-A1-94/04864
- WO-A1-2005/061944
- WO-A1-2005/084833
- WO-A2-02/070943
- US-A- 3 746 026
- US-B1- 6 427 602

## Beschreibung

Die vorliegende Erfindung betrifft ein Molchsegment für den aktiven Vortrieb eines Molches in insbesondere längsgestreckten Hohlkörpern, vorzugsweise in Gas- und Ölpipelines, mit einem Antrieb, der zumindest ein Abstützelement, über das sich das Molchsegment an einer Innenseite des Hohlkörpers abstützen kann, und wenigstens ein Tragelement umfasst, welches entlang einer Längsachse des Molchsegments bewegbar ist. Das Abstützelement ist zur Einnahme einer Abstützposition schwenkbar an dem Tragelement angeordnet. Dabei ergibt sich in der Abstützposition eine Abstützkraft in Abhängigkeit einer in Längsrichtung auf das Tragelement ausgeübten Kraft. Das Abstützelement ist mit einer von der Längsachse weggerichteten und nach außen gerichteten, selbst oder in einer Umhüllenden gekrümmten Oberfläche versehen. Die Oberfläche weist dabei eine variierende Krümmung auf. Des Weiteren betrifft die Erfindung einen Molch, umfassend ein solches Molchsegment.

In größeren Industrieanlagen existieren eine Vielzahl von unterschiedlichen Rohren und Rohrleitungsverbindungen, die typischerweise neben einem waagerechten Verlauf auch in Richtung senkrecht zum Untergrund oder bogenförmig mit Komponenten in Richtung senkrecht zum Untergrund verlaufen. Diese längsgestreckten Hohlkörper, die in der Regel im Querschnitt kreisförmig bzw. angenähert kreisförmig sind, jedoch abschnittsweise auch eckige Querschnitte aufweisen können, müssen von Zeit zu Zeit gewartet und gegebenenfalls saniert werden, weswegen in Intervallen Inspektionsgeräte in Form von Reinigungs- bzw. Inspektionsmolchen durch die Rohre hindurchgeschickt werden. Bei Fehlen eines Antriebsmediums wie beispielsweise Gas, Wasser oder Öl müssen die Molche aktiv durch die längsgestreckten Hohlkörper hindurchbewegt werden.

In der DE 697 23 791 T2 ist ein Molchsegment nach dem Oberbegriff des Anspruchs 1 gezeigt, bei dem das Abstützelement über einen ersten Motor und unabhängig von dem für den Vortrieb des Molches entlang einer Längsachse vorgesehenen weiteren Motor ausfahrbar ist. Die Abstützkräfte, mit denen sich der Molch gegen die Rohrwand abstützen kann, sind durch die verwendete Konstruktion begrenzt und abhängig von dem Motor, der einen Keil gegen eine Führungsrolle schieben kann. Dies kann im ungünstigsten Fall dazu führen, dass bei vertikal oder senkrecht verlaufenden Rohrabschnitten und insbesondere bei gleichzeitigen Krümmungen, wenn die Reibung von an der Rohrinnenwand anliegenden weiteren Teilen des Molches zu erhöhten Scherkräften führt oder wenn schwere Lasten durch das Rohr gezogen werden sollen, die Abstützung zu rutschen beginnt.

In der WO 02/070943 A2 ist ein Molchsegment für den aktiven Vortrieb eines Molches in Pipelines gezeigt, zu dem schwenkbare Arme durch einen Motor nach außen verschwenkt werden können. Durch das Verschwenken sind Räder an den Enden der Arme mit einer Rohrinnenseite in Kontakt zu bringen. Durch einen Antrieb der Räder über ein Getriebe kann der Molch schließlich im Rohr bewegt werden. Nachteilig ist auch bei diesem Molchsegment, dass bei variierenden Rohrdurchmessern keine Traktion gewährleistet werden kann und insbesondere eine Abstützung des Molchs im Rohr nicht an jeder Stelle gewährleistet werden kann.

In der WO 2005/084833 A1 ist eine Vorrichtung zur Fortbewegung in Pipelines offenbart. Die Vorrichtung umfasst eine durch einen Fluidstrom innerhalb der Pipeline anzutreibende Turbine zur Verstellung entlang des Umfangs der Vorrichtung schwenkbar gelagerter Schenkel. Die Schenkel umfassen gemäß einer logarithmischen Spirale geformte Fußelemente, die lösbar an einer Pipelinewandung anzulegen sind.

Es ist daher Aufgabe der vorliegenden Erfindung, einen aktiv in einem längsgestreckten Hohlkörper, insbesondere in einer Rohrleitung, bewegbaren Molch sicherer gegen Durchrutschen in dem Hohlkörper zu gestalten.

Die Aufgabe wird gelöst durch einen Gegenstand gemäß Anspruch 1 sowie durch einen Gegenstand gemäß Anspruch 17. Vorteilhafte Ausgestaltungen der Erfindung sind den hierauf rückbezogenen Unteransprüchen sowie der nachfolgenden Beschreibung zu entnehmen.

Erfindungsgemäß ist vorgesehen, dass das Abstützelement eine im Wesentlichen halbmondförmige Form aufweist, die auf einer Seite, auf der ein Schwenklager angeordnet ist, zunächst stärker gekrümmt ist und dann ausläuft. Dabei hat die Oberfläche abschnittsweise die Form einer Archimedes-Spirale oder eine logarithmische Spiralform. Durch die Krümmung der Oberfläche wird unabhängig vom Innendurchmesser des Hohlkörpers ein ähnliches Verhältnis zwischen der Abstützkraft und der in Längsrichtung auf das Tragelement ausgeübten Kraft beibehalten. Dabei umfasst der Antrieb zumindest einen Motor, durch welchen das Tragelement entlang der Längsachse bewegbar ist. Das Tragelement ist über eine antriebsmäßig mit dem Motor verbundene Gewindestange antreibbar.

In dem Moment, in dem eine Last in Längsrichtung, d.h. in Richtung einer Längsachse des Molchsegments bzw. Molches und von diesem auf das Tragelement wirkt, wird automatisch über das von der Längsachse weg nach außen geschwenkte Abstützelement eine Abstützkraft erzeugt. Diese Kraft ergibt sich als resultierende (senkrecht zur Längsachse und zur Innenseite des Rohres gerichtete) Komponente der von der Schwenkachse, bzw. dem Schwenklager in Richtung des seitlichen Auflagers des Abstützelements an der inneren Oberfläche des Hohlkörpers gerichteten Kraft. Unter Auflager ist hierbei ein Punkt gemeint, der sich als resultierender Angriffspunkt der von dem Abstützelement auf die Abstützfläche an der Innenseite des Hohlkörpers übertragenden Kräfte ergibt. Ein Winkel zwischen der auf das Tragelement ausgeübten Kraft und der vom Schwenk- zum Auflager ausgeübten Kraft ist hierbei vorzugsweise kleiner gleich 90°.

Nachfolgend wird statt des Hohlkörpers vereinfachend auch von einem Rohr, z.B. einem Pipelinerohr einer Gas- oder Ölpipeline, mit einem im Wesentlichen kreisförmigen Querschnitt ausgegangen. Es kann sich jedoch auch um andere, längsgestreckte Hohlkörper, z.B. um zu untersuchende hohle Stahlträger handeln.

Das Abstützelement ist mit einer von der Längsmittelachse weggerichteten Oberfläche versehen, die selbst bzw. deren Umhüllende gekrümmt ist, wobei die Krümmung variiert. Unter einer Umhüllenden ist hierbei eine ohne scharfe Kanten versehene Umhüllende gemeint, die beispielsweise etwaige Zacken auf der nach außen gerichteten Oberfläche mit umfasst. Die Krümmung führt dazu, dass möglichst unabhängig vom Rohrinnendurchmesser ein ähnliches Verhältnis zwischen Zug- und Abstützkraft beibehalten wird. Erfindungsgemäß weist die äußere Oberfläche des Abstützelements abschnittsweise die Form einer Archimedes-Spirale bzw. eine logarithmische Spiralform auf, um eben die Verhältnisse in etwa konstant zu halten.

Das Abstützelement ist weiterhin erfindungsgemäß im Wesentlichen halbmondförmig ausgebildet. Ggf. ist es mit einer vorbeschriebenen Oberfläche versehen, um eine gute Abstützung der zu übertragenden Kräfte zu gewährleisten.

Vorzugsweise ist das Abstützelement dergestalt ausgebildet, dass zwischen einer von der Schwenkachse zu einem möglichen Abstützpunkt, d.h. einem Auflagepunkt in einer möglichen Abstützposition des Schwenkelements, gezogenen Geraden und einer von der Schwenkachse parallel zur Bewegungsrichtung des Tragelements verlaufenden Geraden ein Winkel β 90° ausgebildet wird. Das Abstützelement ist somit dergestalt am Tragelement angeordnet, dass sich eine Vorzugsrichtung ergibt, die entgegen der Abstützkraft bzw. der Abstützung gerichtet ist. Durch eine Abstützung gegen das Abstützelement und das Tragelement kann sich ein Teil des Molchsegments vorschieben, während sich bei Belastung des Tragelements in die andere Richtung ein Mitnehmen der Abstützelemente und ein Durchrutschen an der Rohrinnenseite ergeben kann.

Durch das Schwenklager ergibt sich eine seitliche Abstützung und eine sich aus einer auf das Tragelement ausgeübten Last ergebende Kraftkomponente wirkt in Richtung senkrecht zur Oberfläche der Hohlkörperinnenseite. Ein separater Antrieb zum Aufbringen einer ausreichenden Abstützkraft wie im Stand der Technik ist nicht notwendig.

Durch die Abstützung an der Rohrleitung bzw. dem Rohr/Hohlkörper kann sich der nicht festgesetzte Teil des Molchsegments entlang des Tragelements und angetrieben durch den Antrieb in die entsprechende Richtung bewegen. Typischerweise bewegt sich das Tragelement in einer Führung, so dass sich diese in der Abstützposition relativ zum Tragelement bewegt. Anschließend kann das oder können die Abstützelemente vorzugsweise in eine zurückgezogene Position, d.h. Nicht-Abstützposition, überführt werden. In dieser Position kann das Tragelement mit dem Abstützelement bzw. den Abstützelementen in einer zugehörigen Führung des Molchsegments verfahren werden, um in die Ausgangsposition zum Ausschwenken der Abstützelemente überführt zu werden. Durch das anschließende Ausschwenken der Abstützelemente und dem Abstützen und ggf. gleichzeitigem erneuten Verschieben des Rests des Molchsegments, ergibt sich ein schrittweises Vorschieben des kompletten Molchsegments, bzw. des Molchs.

Um eine symmetrische Abstützung an der Wand zu erreichen und ein Verkanten des Molchsegments während des Abstützens zu verhindern weist ein erfindungsgemäßes Molchsegment vorzugsweise zwei oder mehr Abstützelemente, durch deren Abstützung sich der Molch insbesondere in die Mitte des Rohres orientiert. Bei zwei Abstützelementen liegen diese insbesondere bzgl. einer Längsachse, die einer Längsmittelachse des Molches bzw. des Molchsegments entspricht, einander gegenüber und sind in Umfangsrichtung um 180° versetzt. Bei drei Abstützelementen sind diese entsprechend in Umfangsrichtung um 120° versetzt.

Bei einem Molchsegment mit einem oder zwei einander gegenüberliegenden Abstützelementen kann der Molch in horizontal verlaufenden Rohren bewegt werden. Durch abwechselndes Festsetzen und Bewegen zweier alternierend arbeitender Molchsegmente kann ein Molch entgegen der Schwerkraft in Richtung senkrecht zum Untergrund bewegt werden und hierbei zusätzlich Lasten hinter sich herziehen, z.B. Messinstrumente. Die Zugkraft bzw. die Kraft, die in Längsrichtung an dem Tragelement angreift, ist entgegen der gewünschten Bewegung gerichtet.

Das Abstützelement ist insbesondere dergestalt ausgebildet, dass die Abstützkraft zumindest im Wesentlichen, insb. natürlich vollständig proportional zu der Zugkraft bzw. Kraft ist, die sich durch den Antrieb und/oder eine vom Molchsegment zu bewegende Last unter Einschluss der Gewichtskraft ergibt. Das Verhältnis von Abstützkraft zur Zugkraft, die sich über den Antrieb oder auch über Gewichts- bzw. Reibungs- und angehängte Lasten auf das Tragelement ergibt, ist zumindest in etwa konstant. Höhere Lasten führen zu größeren Anpress- bzw. Abstützkräften, so dass ein mit einem erfindungsgemäßen Molchsegment ausgestatteter Molch in der Lage ist, Gewichte, die das Vielfache seines Eigengewichts betragen, durch eine Rohrleitung und entgegen der Schwerkraft zu transportieren. Durch die Erhöhung der Abstützkraft, mit der das Abstützelement gegen die Rohrinnenseite drückt, erhöht sich die Reibung und anders als im Stand der Technik rutscht der Molch nicht in der Rohrleitung ab.

In einer erfindungsgemäße Weiterbildung weist das Abstützelement des Molchsegments eine Form auf, durch die die Abstützkraft proportional zu der auf das Tragelement wirkenden Kraft F_{Trage} ist, die sich durch den Motor und/oder eine von dem Molchsegment zu bewegende Last ergibt. Insbesondere ist die Abstützkraft F_{Abstütz} ∼ F_{Trage}/(tan α), wobei α der Winkel zwischen einer von der Schwenkachse zu einem Abstützpunkt gezogenen Geraden und einer von der Schwenkachse senkrecht zur Rohrinnenseite verlaufenden Geraden ist. Der Winkel α ist kleiner gleich 90°. Vorzugsweise liegt der Winkel α zwischen 5 und 30°, besonders bevorzugt zwischen 10° und 25°. Bei diesen Winkeln ergeben sich signifikante Abstützkräfte, die groß genug sind, um auch schwere Molche durch die Pipeline zu bewegen.

Das Abstützelement ist schwenkbar im Tragelement gelagert. Das Abstützelement kann mehrteilig ausgebildet sein, wesentlich ist jedoch, dass sich das Abstützelement in der Abstützposition an der Innenseite des längsgestreckten Hohlkörpers abstützt.

Alternativ oder ergänzend zu einer Überführung des Abstützelements in eine zurückgezogene Stellung kann das Molchsegment mit einem insbesondere am Tragelement und am Abstützelement angeordneten Kraftspeicherelement versehen sein, welches das Abstützelement von der Längsmittelachse, die der Längsachse des Molches entspricht, nach außen drückt. Durch die Schwenkbewegung verlagert sich ein Teil des Abstützelements in radialer Richtung. Durch das Kraftspeicherelement wird ein Kontakt zwischen Rohrinnenwand und Abstützelement beibehalten und das Abstützelement muss insbesondere bei Beginn der Verschiebens des Rests des Molchsegments nicht erst in die Abstützposition überführt werden. Während des weiteren Bewegungsvorgangs, bei dem das Tragelement nachgezogen wird, kann das Abstützelement durch den Antrieb in Anlage mit dem Rohr in Richtung der Vorwärtsbewegung bewegt werden, da hierbei (außerhalb der von dem Kraftspeicherelement aufgebrachten Kraft, die vernachlässigt wird) keine Abstützkraft wirkt und das Abstützelement auf der Innenseite des Rohres entlang gleitet. Hierbei ist anzunehmen, dass die Reibung des Rests des Molchsegments mit dem Rohr größer ist als die Reibung zwischen Abstützelement und Rohr.

Obgleich komplexere Mechanismen zur Überführung des Abstützelements in eine nach außen gestellte Position beispielsweise in Abhängigkeit vom Antrieb vorstellbar sind kann, ist die Verwendung eines Kraftspeicherelement wie beispielsweise einer Feder vorteilhaft, das diese Überführung in eine Abstützposition unabhängig vom Antrieb erfolgt. Es erfolgt eine automatische Anpassung des Abstützelements an geänderte Rohrinnendurchmesser.

Vorteilhafterweise ist das Tragelement aus einer Position, in der das Abstützelement in die Abstützposition überführbar ist, entlang der Längsachse in eine Freilaufposition nach vorne überführbar, wobei das Abstützelement an die Längsachse heranschwenkt. Insbesondere kann das Abstützelement hierbei gegen einen Schwenknocken, eine Schwenkrolle oder ein anderes Bauteil laufen, welches eine Schwenkbewegung des Abstützelements an die Längsachse heran und somit ein Einfahren des Abstützelements bewirkt. Dieses Bauteil ist somit in radialer Richtung insbesondere weiter von der Längs(mittel)achse zu beabstanden als die Schwenkachse des Schwenklagers des Abstützelements. Die von dem Tragelement entlang der Längsachse ausführbare Bewegung unterteilt sich hierbei vorzugsweise in einen Anteil für den Vortrieb des Molchsegments und in einen Anteil für die Überführung in die Freilaufposition, wobei die Aufteilung insbesondere in Abhängigkeit der Form des/der Abstützelemente vorgenommen werden kann. Vorzugsweise liegt die Aufteilung wie auch beim nachfolgenden beschriebenen Ausführungsbeispiel bei 50:50.

Die Überführung in die Freilaufposition ist insbesondere für den Fall einer Verklemmung des Molchsegments oder des Molches vorteilhaft. Bei einer Blockade kann der Rest des Molchsegments ggf. nicht mehr relativ zum Tragelement nach vorne bewegt werden. Um aus dieser Position, in der auch das oder die Abstützelemente blockiert sind, eine Rückwärtsbewegung zu ermöglichen, kann dann das Tragelement nach vorne bewegt werden, wodurch die Abstützelemente freigegeben werden. Vorzugsweise sind vor und hinter dem Abstützmittel Führungselemente angeordnet, die einem Verkanten des Molchsegments im Hohlkörper entgegenwirken und insbesondere in einer Position im Hohlkörper, in der die Längsmittelachse des Molches angewinkelt zur Längsachse des Hohlkörpers steht, eine Reibung zwischen Molchsegment und Hohlkörper minimiert wird. Auch können in Umfangsrichtung des Molchsegments zwischen den Abstützelementen Führungselemente angeordnet sein, die gerade bei engen Bögen die Reibung zwischen ungewünscht anliegenden Teilen des Molches und der Rohrwand minimieren.

Um eine optimale Abstützung des Abstützelements zu erreichen und ein Durchrutschen des Abstützelement auch bei ungünstigeren Winkeln zur Rohrwand zu verhindern, ist das Abstützelement vorzugsweise mit einer nach außen gerichteten Oberfläche zu versehen, die reibungserhöhend ausgebildet ist. Hierbei kann es sich um beispielsweise auf der Oberfläche ausgebildete Zacken, Spitzen od.dgl. wirkende Mittel handeln. Die Oberfläche kann alternativ und auch ergänzend mit einer Beschichtung versehen oder aufgerauht sein. Zwecks Vermeidung einer Beschädigung einer Innenseite der Rohrwand kann insbesondere auch eine Kombination einer mit einer Beschichtung beispielsweise aus Polyurethan versehenen Oberfläche mit Zacken verwendet werden, wobei die Zacken erst dann in Eingriff mit der Wand und entsprechend reibungserhöhend wirken, wenn die Beschichtung durch Einwirkung einer Kraft einer vordefinierbaren Größe soweit eingedrückt ist, dass die Zacken aus dem Material in Eingriff mit der Wand gelangen können.

Unter der nach außen gerichteten Oberfläche ist hierbei eine von der Längsachse/Längsmittelachse in radialer Richtung weggerichtete Oberfläche gemeint. Eine Normal der Oberfläche muss jedoch nicht senkrecht zur Längsachse stehen sondern weist lediglich von dieser weg. Diese Oberfläche ist im Hohlkörper zur innenseitigen Oberfläche desselben ausgerichtet.

Insbesondere bei der Verwendung zweier einander gegenüberliegender Abstützelemente ist es von Vorteil, wenn das Tragelement zentral im Molchsegment angeordnet ist, so dass sich bereits hieraus eine symmetrische Aufteilung der am Tragelement anliegenden Kräfte zu beiden Seiten ergibt. Das Tragelement selbst kann in einer Führung oder auf einer Führung geführt sein, beispielsweise auf der Gewindestange. Durch Verwendung der Gewindestange ist eine einfache Möglichkeit gegeben, das Tragelement einerseits in Längsrichtung durch Drehung der Gewindestange zu bewegen und andererseits die in der Abstützposition auch ohne Bewegung die anstehenden Kräfte aufzunehmen.

Eine genaue und einfache Führung des Tragelements ist dann realisiert, wenn das Tragelement ausschließlich längsbeweglich im Molch angeordnet ist, d.h. in Längsrichtung des Molchsegments in und entgegen der Bewegungsrichtung des gesamten Molchs bewegt werden kann.

Es kann jedoch auch vorteilhaft sein, das Tragelement drehbeweglich und zumindest mit einer Komponente in Richtung der Längsachse längsbeweglich im Molch anzuordnen. Durch eine solche Anordnung des Tragelements und insbesondere durch eine gleichzeitige Ausbildung des Tragelements als scheibenförmiges Tragelements mit einer Mehrzahl von entlang seines Umfangs angeordneten Abstützelementen ist unter Verzicht auf eine intermittierend aufgebaute Fortbewegungsweise eine kontinuierliche Bewegung des Molches in der Rohrleitung möglich. Anders als beispielsweise bei Molchen mit motorisch angetriebenen Rädern, über die gleichzeitig eine Abstützung an der Pipelinewand erfolgt, ist hierbei jedem Tragelement eine Mehrzahl von Abstützelementen, die schwenkbar auf dem Tragelement angeordnet sind, zugeordnet. Jedes der Abstützelemente führt zu der vorbeschriebenen Ausbildung der Abstützkraft.

Diese kontinuierliche Bewegung wird insbesondere dadurch erreicht, dass ein entsprechendes Molchsegment über zwei eine identische Drehachse aufweisende Tragelemente verfügt, wobei die Abstützelemente der beiden Tragelemente dergestalt in Umfangsrichtung bezüglich der Drehachse versetzt zueinander angeordnet sind, dass sie alternierend von einem Tragelement zum nächsten Tragelement mit einer Innenseite des Hohlkörpers in die Abstützposition gelangen.

Solche mit beispielsweise als Drehscheiben versehenen Tragelemente ausgestattete Molchsegmente sind insbesondere dann vorteilhafterweise weitergebildet, wenn zur symmetrischen Aufteilung der Kräfte jeweils eine oder auch zwei Drehscheiben mit auf einer bezüglich der Längsachse gegenüberliegenden Seite versehenen weiteren Drehscheiben ausgestattet sind.

Das Tragelement eines erfindungsgemäßen Molchsegments ist erfindungsgemäß antriebsmäßig über einem Motor verbundene Gewindestange antreibbar. Hierdurch ergibt sich bereits eine einfache Möglichkeit, eine vom Motor ausgeübte Drehzahl zu reduzieren, um höhere Kräfte auf das Tragelement ausüben zu können. Der Motor ist über eine zugehörige Steuervorrichtung, die die Bewegung des Molchsegments steuert, ansteuerbar.

Zur Erhöhung der Ausfallsicherheit und auch zur Ausübung einer höheren Kraft auf das Abstützelement, kann ein weiterer Motor zum gleichzeitigen Antrieb derselben Gewindestange vorgesehen sein.

Weiterhin kann die Gewindestange über ein zusätzliches Getriebe mit dem Motor bzw. den Motoren verbunden sein, um die erforderlichen Kräfte noch gezielter aufbringen zu können. Der Nachteil einer langsameren Fortbewegung des Tragelements entlang der Längsachse wird durch die Verstärkung der zur Verfügung stehenden Vortriebskraft wett gemacht.

Eine vorteilhafte Ausnutzung des zur Verfügung stehenden Bauraums für eine vorzugsweise im Wesentlichen zylinderförmige Ausbildung eines Molches ist dann gegeben, wenn das Abstützelement über einen Hohlkörper geführt ist, in dem der oder einer der Motoren angeordnet ist. Bei den Motoren kann es sich um Hydraulik- oder E-Motoren handeln. Ein zugehörigen Molch weist zur autarken Energieversorgung vorzugsweise einen Energiespeicher auf, der im Molchsegment bzw. im zugehörigen Molch mitgeführt wird.

Die eingangs gestellte Aufgabe wird ebenfalls durch einen teilweise auch bereits vorbeschriebenen Molch gelöst, der eines der vor- oder nachbeschriebenen Molchsegmente aufweist.

Vorzugsweise ist ein solcher Molch mit zwei Molchsegmenten versehen, wobei der Molch zumindest eine Steuervorrichtung aufweist, über die die Abstützelemente jeweils eines Molchsegments abwechselnd zu denen des anderen Molchsegments bewegbar sind. Die Steuervorrichtung ist vorzugsweise Teil des Molchs. Sie kann allerdings auch für weniger autarke Molche genauso wie eine Stromversorgung entfernt vom Molch über Kabel mit dem Molch verbunden sein.

Wie vorbeschrieben ist ein Molchsegment mit einer Vorzugsrichtung versehen, die der Bewegungsrichtung des Molchsegments entspricht und die entgegen der auf das Tragelement wirkenden Kraft gerichtet ist. Das Molchsegment oder der zugehörige Molch stößt sich somit an der Rohrinnenseite nach vorne ab. Durch die Hintereinanderschaltung zweier Molchsegmente mit identischer Bewegungsrichtung und deren abwechselnden Betrieb ist es möglich, die Molchsegmente, die miteinander verbunden sind, auch entgegen der Schwerkraft senkrecht in einem Rohr nach oben zu bewegen.

Die Hintereinanderschaltung zweier Molchsegmente in entgegengesetzter Richtung, d.h. mit entgegengesetzten Vorzugsrichtungen führt bei einem weiteren erfindungsgemäßen Ausführungsbeispiel dazu, dass sich der Molch bzw. die Kombination der beiden Molchsegmente in horizontaler Richtung in ein Rohr hinein- und wieder herausbewegen kann. Entsprechend führt die Hintereinanderschaltung vierer Molchsegmente bzw. die Ausstattung eines einzelnen Molchsegments mit entsprechend dann zumindest jeweils zwei entgegengesetzt wirkenden Abstützelementen dazu, dass ein zugehöriger Molch bzw. die Kombination der Molchsegmente sich dann vor und zurück und jeweils auch entgegengesetzt der Schwerkraft in vertikaler Richtung bewegen kann. So können beispielsweise die Schenkel von U-förmigen Rohrabschnitten in beide Richtungen durchfahren werden.

Weitere Vorteile und Einzelheiten der Erfindung sind der nachfolgenden Figurenbeschreibung mit Ausführungsbeispielen zu entnehmen. In den schematischen Abbildungen der Figuren zeigt:
- Fig. 1: einen erfindungsgemäßen Gegenstand in einer perspektivischen Ansicht,
- Fig. 2: den Gegenstand nach Fig. 1 in einem Schnitt entlang der Abstützelemente,
- Fig. 3: den Gegenstand nach Fig. 2 in einem um 90° versetzten Schnitt,
- Fig. 4: einen weiteren erfindungsgemäßen Gegenstand,
- Fig. 5: ein Detail eines Gegenstands nach Fig. 4.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

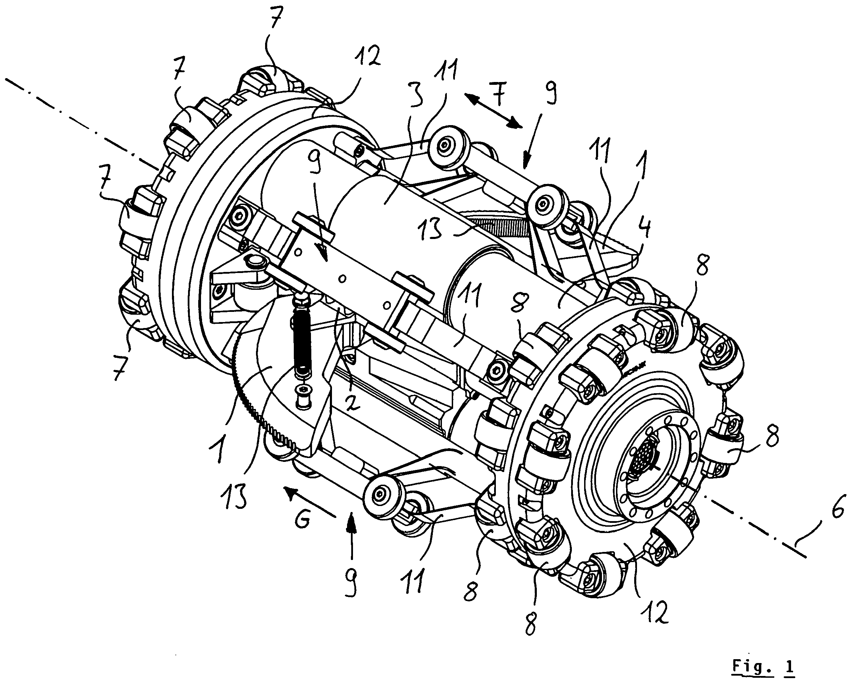

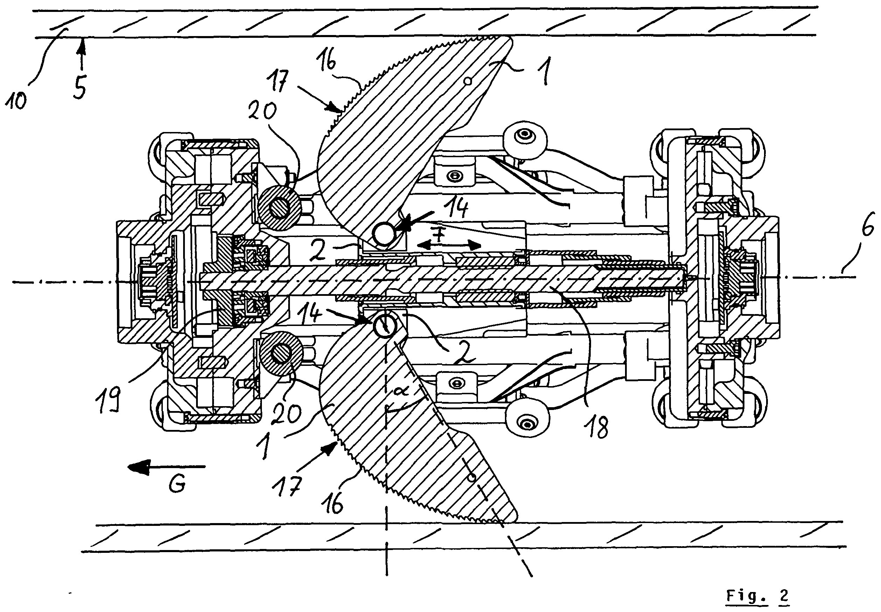

Ein erfindungsgemäßes Molchsegment gemäß Fig. 1 weist zwei einander gegenüberliegende Abstützelemente 1 auf, die schwenkbar an demselben zentralen Tragelement 2 angeordnet sind (vgl. Fig. 2) und die in eine Abstützposition in Anlage an einer Innenseite 5 eines rohrförmigen Hohlkörpers 10 überführt werden können.

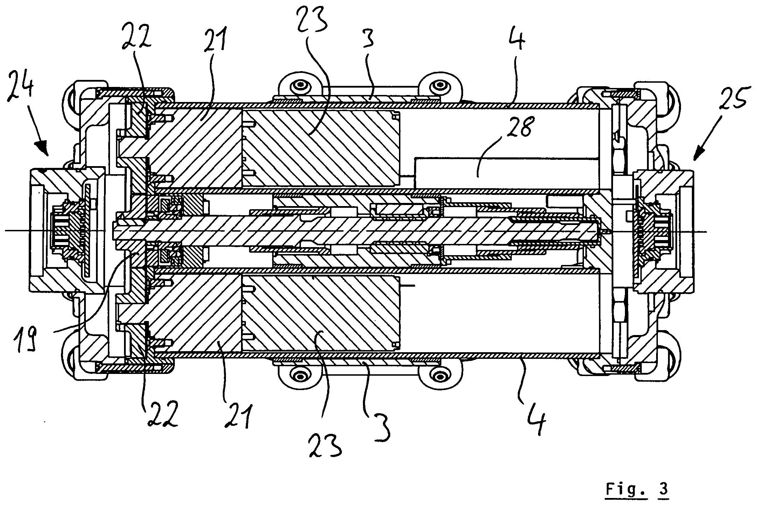

Das Tragelement 2 ist zentral angeordnet, jedoch über zwei Führungsmanschetten 3 dezentral an zwei als Hohlzylinder ausgebildeten Hohlkörpern 4 abgestützt und geführt (vgl. Fig. 3). Die Hohlzylinder 4 sind ihrerseits wiederum symmetrisch zu einer Längsachse 6 angeordnet, wobei das Tragelement 2 entlang seiner Führung in Richtung(en) des Doppelpfeils F bewegbar ist. Die Bewegungs- und Vorzugsrichtung des Molchsegments entspricht der Richtung des Pfeils G. An den bezüglich dieser Bewegungsrichtung vorderen Ende des Molchsegments befinden sich eine Vielzahl von in Umfangsrichtung um die Längsachse 6 angeordneten Führungselementen 7 in Form von Rollen, die bei einem Anwinkeln des Molchsegments gemeinsam mit den am hinteren Ende befindlichen Führungselementen 8, die ebenfalls als Rollen ausgebildet sind, ein Verkanten des Molchsegments vermeiden sollen. Den Abstützelementen zugeordnet sind entsprechende Aufnahmen und Halterungen, über die diese Führungselemente am Molchsegmentkörper gehalten sind.

Zusätzlich sind in Umfangsrichtung um die Längsachse herum zwischen den Abstützelementen 1 weitere federbelastete Führungselemente 9 angeordnet, die jeweils vier Rollen an einem Tragkörper aufweisen, welcher wiederum über Blattfedern 11 an Molchsegmentkörpern 12 gehalten sind. Diese zusätzlichen Führungselemente 9 verhindern, dass sich der Molch bei Bogendurchfahrten auf der Innenseite des Bogens an der Rohrwand ansetzt und dort verklemmt.

Kraftspeicherelemente 13 in Form von Federn drücken die Abstützelemente von der Längsachse 6, die der Längsmittelachse entspricht, nach außen weg.

Die Abstützelemente 1 weisen eine angenähert halbmondförmige Form, die auf einer Seite, auf der ein Schwenklager 14 angeordnet ist, zunächst stärker gekrümmt ist und dann ausläuft. Hierdurch ergibt sich bei Betrachtung einer die Zacken 16 der Abstützelemente mit eingrenzenden Umhüllenden einer äußeren Oberfläche 17 ein in etwa einer logarithmischen Spirale entsprechender Verlauf. Dies bewirkt, dass eine Kraft F_{Trage}, die in Richtung der Längsachse 6 auf das Schwenklager 14 wirkt, eine Abstützkraft F_{Abstütz} in Richtung senkrecht zur Längsachse 6 und somit in Richtung der Rohrwand und auch senkrecht auf diese bewirkt.

Bei einer Krümmung einer Oberfläche, die einer logarithmischen Spirale entspricht, sind die Verhältnisse von Zugkräften auf das Tragelement zu Abstützkräften senkrecht zur Längsachse und somit auch senkrecht zur Rohrwand in etwa identisch. Die in Richtung der Rohrinnenwand und senkrecht zur Längsmittelachse 6 wirkende Abstützkraft ist proportional zur in Längsrichtung auf das Tragelement 2 wirkenden Kraft geteilt durch den Tangens(a) des Winkels zwischen der Senkrechten zur Längsmittelachse und einer Linie zwischen der Schwenkachse und dem Abstützpunkt an der Rohrinnenwand (F_{Abstütz} ~ F_{Trage}/(tan α). In der Fig. 2 ist dieser Abstützpunkt um knapp 30° aus der Senkrechten zur Längsmittelachse 6 um den Winkel α verschwenkt. Der Schnittpunkt der beiden Winkelschenkel ist die Schwenkachse des Abstützelement 1.

Die Längsmittelachse ist gleichzeitig auch Drehachse einer Gewindestange 18, die über ein Gewinde mit dem Tragelement 2 kämmt und dieses in die Richtungen F bewegen kann. Angetrieben wird diese Gewindestange über ein in Fahrtrichtung vorne befindliches Getriebe mit einem Stirnrad 19, welches von zwei in den als Hohlzylinder ausgebildeten Hohlkörpern 4 angeordneten Motoren angetrieben wird.

Zwischen den Motoren 21 und dem Stirnrad 19 sind weitere Stirnräder 22 angeordnet, die mit dem Stirnrad 19 kämmen. Energiespeicher 23 dienen der autarken Energieversorgung des Molches bzw. des Molchsegments. Eine Steuervorrichtung zur intermittierend erfolgenden Vorwärtsbewegung des Molchsegments ist nicht näher dargestellt. Das in der Fig. 3 dargestellte Molchsegment ist gleichzeitig auch ein vollständig ausgebildeter Molch, der über Anschlüsse 24 und 25 mit weiteren Molchsegmenten verbunden werden kann bzw. etwaige Lasten mit sich führen kann. Die Anschlüsse 24 und 25 weisen typischerweise Gewinde zum Verschrauben etwaiger weiterer Molchsegmente sowie Kontakte zur Verbindung mit Steuerelektronik bzw. zur Energieversorgung auf.

Um einen Vorschub in Richtung G zu erreichen, müssen die Abstützelemente in der Abstützposition sein und mit der Rohrinnenwand verbunden sein (Fig.2). Durch eine Last auf das Tragelement in Richtung entgegen der Richtung G, d.h. nach hinten, verklemmt sich der Molch in dem Rohr und der Nichtabstützelemente und Tragelemente betreffende Teil des Molchsegments schiebt sich über die Drehung der Gewindestange in Richtung G nach vorne. Die Bewegungsabfolge wird über eine Steuervorrichtung 28, die auch an anderer Stelle im Molch positioniert werden kann, gesteuert. Zum Erreichen der Freilaufposition mit in Richtung der Längsachse verschwenkten Abstützelementen 1 kann das Tragelement 2 insbesondere bei einer Blockade des Molches aus der in der Fig. 2 gezeigten Position in Richtung G weiter nach vorne verfahren, so dass Schwenkrollen 20 die außenstehenden Abstützelemente in Richtung der Längsachse 6 drücken.

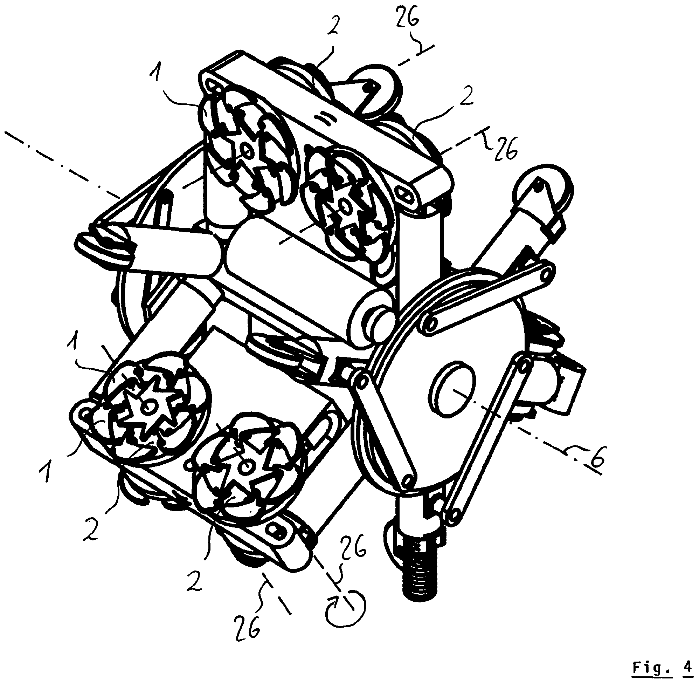

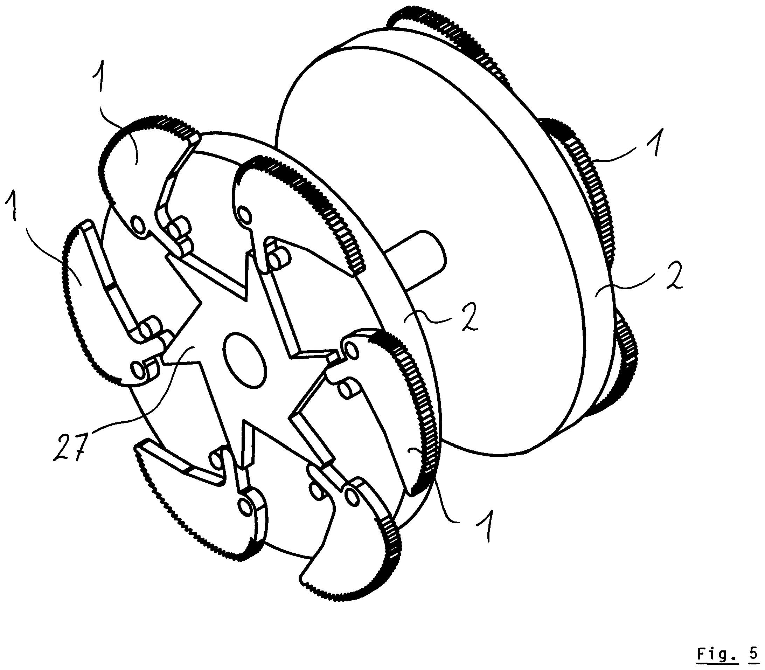

Bei dem Ausführungsbeispiel gemäß der Fig. 4 sind in Umfangsrichtung um eine Längsmittelachse 6 herum zwölf scheibenförmige Tragelemente 1 angeordnet, die um Achsen 26 herum drehbeweglich angeordnet sind. Durch die insbesondere synchrone Drehung der Tragelemente um die Achsen 26 herum kommen die entsprechend dem Abstützelement gemäß dem ersten Ausführungsbeispiel ausgebildeten Abstützelemente 1, von denen jedes scheibenförmige Tragelement in Umfangsrichtung um die Drehachse 26 herum sechs Stück aufweist, abwechselnd in Eingriff mit einer Rohrwand. Jedes Abstützelement 1 ist schwenkbar an dem Tragelement 2 angeordnet und durch die Bewegungskomponente des Tragelements in Richtung der Längsmittelachse 6 wird ein Teil der vom Tragelement ausgeübten Kraft zur Abstützung des Molchsegments an einer Rohrinnenwand verwendet bzw. erzeugt. Über ein sternförmiges Betätigungselement 27 (Fig. 5), welches jedem Tragelement zugeordnet ist, können die Abstützelemente um ihre Schwenkachse verschwenkt und somit in eine Abstützposition verbracht bzw. aus dieser gelöst werden.

Bezüglich der von den Abstützelementen 1 des weiteren Ausführungsbeispiels auf die Rohrinnenwand übertragenen Kräfte gilt dasselbe wie zum vorherigen Ausführungsbeispiel. Auch sind diese Abstützelemente wiederum mit einer zumindest in der Abstützposition nach außen gerichteten Oberfläche versehen, die eine dem Abstützelement des vorherigen Ausführungsbeispiels analogen Krümmung entsprechen.

## Patentansprüche

1. Molchsegment für den aktiven Vortrieb eines Molches in insbesondere längsgestreckten Hohlkörpern, vorzugsweise in Gas- und Ölpipelines, mit einem Antrieb, der zumindest ein Abstützelement (1), über das sich das Molchsegment an einer Innenseite (5) des Hohlkörpers (10) abstützen kann, und wenigstens ein Tragelement (2) umfasst, welches entlang einer Längsachse (6) des Molchsegments bewegbar ist, wobei das Abstützelement (1) zur Einnahme einer Abstützposition schwenkbar an dem Tragelement (2) angeordnet ist und sich in der Abstützposition eine Abstützkraft in Abhängigkeit einer in Längsrichtung auf das Tragelement (2) ausgeübten Kraft ergibt, wobei das Abstützelement (1) mit einer von der Längsachse (6) weggerichteten und nach außen gerichteten, selbst oder in einer Umhüllenden gekrümmten Oberfläche (17) versehen ist, die eine variierende Krümmung aufweist, wobei das Abstützelement (1) eine im Wesentlichen halbmondförmige Form aufweist, die auf einer Seite, auf der ein Schwenklager (14) angeordnet ist, zunächst stärker gekrümmt ist und dann ausläuft, wobei durch die Krümmung der Oberfläche (17), welche abschnittsweise die Form einer Archimedes-Spirale oder eine logarithmische Spiralform aufweist, unabhängig vom Innendurchmesser des Hohlkörpers ein ähnliches Verhältnis zwischen der Abstützkraft und der in Längsrichtung auf das Tragelement (2) ausgeübten Kraft beibehalten wird, wobei der Antrieb zumindest einen Motor umfasst, durch welchen das Tragelement entlang der Längsachse bewegbar ist, und das Tragelement (2) über eine antriebsmäßig mit dem Motor (21) verbundene Gewindestange antreibbar ist.

2. Molchsegment nach Anspruch 1, **dadurch gekennzeichnet, dass** das Abstützelement (1) an der Oberfläche (17) eine Spiralform aufweist, durch die die Abstützkraft proportional zu einer Kraft ist, die sich durch den Motor und/oder eine vom Molchsegment zu bewegende Last ergibt.

3. Molchsegment nach einem der vorherigen Ansprüche, **dadurch gekennzeichnet, dass** zumindest ein Kraftspeicherelement (13) das Abstützelement (1) von der Längsachse (6) nach außen drückt.

4. Molchsegment nach einem der vorherigen Ansprüche, **dadurch gekennzeichnet, dass** das Abstützelement (1) eine nach außen gerichtete Oberfläche (17) aufweist, die reibungserhöhend ausgebildet ist.

5. Molchsegment nach einem der vorherigen Ansprüche, **dadurch gekennzeichnet, dass** entlang der Längsachse (6) vor und hinter dem Abstützelement (1) Führungselemente (7,8) angeordnet sind.

6. Molchsegment nach einem der vorherigen Ansprüche, **dadurch gekennzeichnet, dass** zwischen einer von der Schwenkachse zu einem möglichen Abstützpunkt gezogenen Gerade und einer von der Schwenkachse parallel zur Bewegungsrichtung des Tragelements verlaufenden Gerade ein Winkel β ≤ 90° ausgebildet wird.

7. Molchsegment nach einem der vorherigen Ansprüche, **gekennzeichnet durch** zwei bezüglich der Längsachse (6) gegenüberliegende Abstützelemente (1).

8. Molchsegment nach einem der vorherigen Ansprüche, **dadurch gekennzeichnet, dass** das Tragelement (2) zentral im Molchsegment angeordnet ist.

9. Molchsegment nach einem der vorherigen Ansprüche, **dadurch gekennzeichnet, dass** das Tragelement (2) ausschließlich längsbeweglich im Molchsegment angeordnet ist.

10. Molchsegment nach einem der Ansprüche 1 bis 9, **dadurch gekennzeichnet, dass** das Tragelement (2) drehbeweglich und mit zumindest einer Komponente in Richtung der Längsachse (6) längsbeweglich im Molch angeordnet ist.

11. Molchsegment nach Anspruch 10, **dadurch gekennzeichnet, dass** das insbesondere scheibenförmige Tragelement (2) eine Mehrzahl von entlang seines Umfangs angeordneten Abstützelementen (1) aufweist.

12. Molchsegment nach Anspruch 10 oder 11 mit zwei Trageelementen (2), **dadurch gekennzeichnet, dass** die Abstützelemente (1) der beiden Tragelemente (2) dergestalt in Umfangsrichtung der Tragelemente (2) versetzt zueinander angeordnet sind, dass sie alternierend mit einer Innenseite (5) des Hohlkörpers (10) in die Abstützposition gelangen.

13. Molchsegment nach einem der vorhergehenden Ansprüche, **dadurch gekennzeichnet, dass** ein weiterer Motor (21) zum gleichzeitigen Antrieb derselben Gewindestange (18) vorgesehen ist.

14. Molchsegment nach einem der vorhergehenden Ansprüche, **dadurch gekennzeichnet, dass** die Gewindestange (18) über ein Getriebe mit dem Motor (21) verbunden ist.

15. Molchsegment nach einem der vorhergehenden Ansprüche, **dadurch gekennzeichnet, dass** das Abstützelement (1) über einen Hohlkörper (4) geführt ist, in dem ein/der Motor (21) angeordnet ist.

16. Molchsegment nach einem der vorherigen Ansprüche, **dadurch gekennzeichnet, dass** das Tragelement (2) aus einer Position, in der das Abstützelement (1) in die Abstützposition überführbar ist, entlang der Längsachse (6) in eine Freilaufposition nach vorne überführbar ist, wobei das Abstützelement (1) an die Längsachse (6) heranschwenkt.

17. Molch, **gekennzeichnet durch** zumindest ein Molchsegment nach einem der vorherigen Ansprüche.

18. Molch nach Anspruch 17 mit zwei Molchsegmenten, **dadurch gekennzeichnet, dass** mittels einer Steuervorrichtung das/die Abstützelemente (1) jeweils eines Molchsegmentes abwechselnd zu denen des anderen Molchsegments bewegbar sind.

19. Molch nach Anspruch 17 mit zwei Molchsegmenten, **dadurch gekennzeichnet, dass** Vorzugsrichtungen der beiden Molchsegmente einander entgegengesetzt sind.

20. Molch nach einem der vorherigen Ansprüche 17 bis 19, **gekennzeichnet durch** einen Energiespeicher zur autarken Energieversorgung des Molchs.

## Claims

1. Pig segment for actively propelling a pig in elongated hollow bodies in particular, preferably in gas and oil pipelines, comprising a drive and at least one supporting element (1) by means of which the pig segment can be supported on an inner surface (5) of the hollow body (10), and at least one bearing element (2) that can be moved along a longitudinal axis (6) of the pig segment, wherein the supporting element (1) is pivotably arranged on the bearing element (2) such that said supporting element can adopt a supporting position, in which position a supporting force is produced relative to a force being exerted on the bearing element (2) in a longitudinal direction, wherein the supporting element (1), i.e. either the element itself or its enclosure, has a curved surface (17) that faces outwards and points away from the longitudinal axis (6), said curvature being varied, wherein the supporting element (1) has a substantially crescent-shaped form, which, on one side on which a swivel bearing (14) is arranged, is initially more curved and then tapers off, wherein, due to the curvature of the surface (17) which in some regions has the form of an Archimedes spiral or a logarithmic spiral form, independently from the inner diameter of the hollow body, a similar ratio is maintained between the supporting force and the force exerted on the bearing element (2) in the longitudinal direction, wherein the drive comprises at least one motor by means of which the bearing element is movable along the longitudinal axis and by means of which the bearing element (2) can be driven via a threaded rod connected to the motor (21) by means of the drive.

2. Pig segment according to claim 1, **characterised in that** the supporting element (1) has a spiral shape on the surface (17), which makes the supporting force proportional to a force that is produced by the motor and/or a load to be moved by the pig segment.

3. Pig segment according to any of the previous claims, **characterised in that** at least one force storage element (13) pushes the supporting element (1) outwards from the longitudinal axis (6).

4. Pig segment according to any of the previous claims, **characterised in that** the supporting element (1) has an outward facing surface (17) that is formed such that it increases the friction.

5. Pig segment according to any of the preceding claims, **characterised in that** guiding elements (7,8) are arranged along the longitudinal axis (6) in front of and behind the supporting element (1).

6. Pig segment according to any of the preceding claims, **characterised in that** an angle β ≤ 90° is formed between a straight line drawn from the swivel axis to a possible supporting point and a straight line that runs from the swivel axis parallel to the direction of movement of the bearing element.

7. Pig segment according to any of the preceding claims, **characterised by** at least two supporting elements (1) that are opposite each other in relation to the longitudinal axis (6).

8. Pig segment according to any of the preceding claims, **characterised in that** the bearing element (2) is centrally arranged in the pig segment.

9. Pig segment according to any of the preceding claims, **characterised in that** the bearing element (2) is arranged in the pig segment such that it can only move longitudinally.

10. Pig segment according to any of claims 1 to 9, **characterised in that** the bearing element (2) is pivotably arranged in the pig such that at least one component is longitudinally movable in the direction of the longitudinal axis (6).

11. Pig segment according to claim 10, **characterised in that** the preferably disc-shaped bearing element (2) comprises a plurality of supporting elements (1) that are arranged along its circumference.

12. Pig segment according to either claim 10 or claim 11 having two bearing elements (2), **characterised in that** the supporting elements (1) of the two bearing elements (2) are arranged offset from each other in the circumferential direction of the bearing elements (2) such that they alternatingly arrive in the supporting position with one inner surface (5) of the hollow body (10).

13. Pig segment according to any of the preceding claims, **characterised in that** a further motor (21) is provided for simultaneous drive of the same threaded rod (18).

14. Pig segment according to any of the preceding claims, **characterised in that** the threaded rod (18) is connected with the motor (21) by means of a gear.

15. Pig segment according to any of the preceding claims, **characterised in that** the supporting element (1) is guided over a hollow body (4) in which a/the motor (21) is arranged.

16. Pig segment according to any of the preceding claims, **characterised in that** the bearing element (2) can be transitioned forwards along the longitudinal axis (6) from a position in which the supporting element (1) can be transitioned to the supporting position to a freewheel position, wherein the supporting element (1) pivots to the longitudinal axis (6).

17. Pig, **characterised by** at least one pig segment according to any of the preceding claims.

18. Pig according to claim 17 having two pig segments, **characterised in that** the support elements (1) can each be alternately moved to those of the other pig segment by means of a control device.

19. Pig according to claim 17 having two pig segments, **characterised in that** preferred directions of the two pig segments are opposed to each other.

20. Pig according to any of the preceding claims 17 to 19, **characterised by** an energy storage for the self-sufficient energy supply of the pig.

## Revendications

1. Segment d'écouvillon destiné à faire avancer activement un écouvillon dans des corps creux, en particulier allongés, de préférence dans des gazoducs et des oléoducs, avec un entraînement qui comprend au moins un élément d'appui (1), au moyen duquel le segment d'écouvillon peut être mis en appui contre une face intérieur (5) du corps creux (10), et au moins un élément de support (2), lequel peut être déplacé le long d'un axe longitudinal (6) du segment d'écouvillon, dans lequel l'élément d'appui (1) est agencé de manière pivotante au niveau de l'élément de support (2) pour prendre une position d'appui et, dans la position d'appui, exerce une force d'appui en fonction d'une force appliquée à l'élément de support (2) dans une direction longitudinale, dans lequel l'élément d'appui (1) est pourvu d'une surface courbe (17) qui est orientée à l'opposé de l'axe longitudinal (6) et est orientée vers l'extérieur, elle-même ou dans une enveloppe, qui a une courbure variable, dans lequel l'élément d'appui (1) présente une forme sensiblement en forme de croissant qui; d'un côté sur lequel est agencé un palier de pivotement (14) est initialement plus incurvé puis se termine, dans lequel par l'intermédiaire de la courbure de la surface (17), qui présente par endroits la forme d'une spirale d'Archimède ou une forme de spirale logarithmique, quel que soit le diamètre intérieur du corps creux, un rapport similaire est maintenu entre la force d'appui et la force appliquée à l'élément de support (2) dans une direction longitudinale, dans lequel l'entraînement comprend au moins un moteur, au moyen duquel l'élément de support peut être déplacé le long de l'axe longitudinal, et l'élément de support (2) peut être entraîné via une tige filetée qui est reliée en entraînement au moteur (21).

2. Segment d'écouvillon selon la revendication 1, **caractérisé en ce que** l'élément d'appui (1) présente une forme en spirale au niveau de la surface (17), au moyen de laquelle la force d'appui est proportionnelle à une force exercée par le moteur et/ou une charge devant être déplacée par le segment d'écouvillon.

3. Segment d'écouvillon selon l'une quelconque des revendications précédentes, **caractérisé en ce qu'**au moins un élément de stockage d'énergie (13) pousse l'élément d'appui (1) vers l'extérieur depuis l'axe longitudinal (6).

4. Segment d'écouvillon selon l'une quelconque des revendications précédentes, **caractérisé en ce que** l'élément d'appui (1) présente une surface orientée vers l'extérieur (17), qui est conçue pour augmenter la friction.

5. Segment d'écouvillon selon l'une quelconque des revendications précédentes, **caractérisé en ce que** des éléments de guidage (7, 8) sont agencés le long de l'axe longitudinal (6) devant et derrière l'élément d'appui (1).

6. Segment d'écouvillon selon l'une quelconque des revendications précédentes, **caractérisé en ce qu'**un angle β ≤ 90° est formé entre une ligne tracée de l'axe de pivotement jusqu'à un point d'appui possible et une ligne s'étendant de l'axe de pivotement parallèlement à une direction de déplacement de l'élément de support.

7. Segment d'écouvillon selon l'une quelconque des revendications précédentes, **caractérisé par** au moins deux éléments d'appui (1) opposés l'un à l'autre par rapport à l'axe longitudinal (6).

8. Segment d'écouvillon selon l'une quelconque des revendications précédentes, **caractérisé en ce que** l'élément de support (2) est agencé de manière centrale dans le segment d'écouvillon.

9. Segment d'écouvillon selon l'une quelconque des revendications précédentes, **caractérisé en ce que** l'élément de support (2) est agencé dans le segment d'écouvillon exclusivement pouvant être déplacé longitudinalement.

10. Segment d'écouvillon selon l'une quelconque des revendications 1 à 9, **caractérisé en ce que** l'élément de support (2) est agencé dans l'écouvillon de manière à pouvoir tourner et avec au moins un composant pouvant être déplacé dans la direction de l'axe longitudinal (6).

11. Segment d'écouvillon selon la revendication 10, **caractérisé en ce que** l'élément de support en particulier en forme de disque (2) a une pluralité d'éléments d'appui (1) agencés le long de sa circonférence.

12. Segment d'écouvillon selon la revendication 10 ou 11 avec deux éléments de support (2), **caractérisé en ce que** les éléments d'appui (1) des deux éléments de support (2) sont agencés décalés l'un par rapport à l'autre dans la direction circonférentielle des éléments de support (2), de sorte qu'ils arrivent dans la position d'appui en alternance avec une face intérieure (5) du corps creux (10).

13. Segment d'écouvillon selon l'une quelconque des revendications précédentes, **caractérisé en ce qu'**un autre moteur (21) est prévu pour entraîner simultanément la même tige filetée (18).

14. Segment d'écouvillon selon l'une quelconque des revendications précédentes, **caractérisé en ce que** la tige filetée (18) est reliée au moteur (21) par l'intermédiaire d'un engrenage.

15. Segment d'écouvillon selon l'une quelconque des revendications précédentes, **caractérisé en ce que** l'élément d'appui (1) est guidé sur un corps creux (4) dans lequel un/le moteur (21) est agencé.

16. Segment d'écouvillon selon l'une quelconque des revendications précédentes, **caractérisé en ce que** l'élément de support (2) peut être transféré vers l'avant à partir d'une position, dans laquelle l'élément d'appui (1) peut être transféré jusque dans la position d'appui, le long de l'axe longitudinal (6) jusque dans une position libre, dans lequel l'élément d'appui (1) pivote au niveau de l'axe longitudinal (6).

17. Ecouvillon, **caractérisé par** au moins un segment d'écouvillon selon l'une quelconque des revendications précédentes.

18. Ecouvillon selon la revendication 17 avec deux segments d'écouvillon, **caractérisé en ce qu'**au moyen d'un dispositif de commande, le ou les éléments d'appui (1) d'un segment d'écouvillon peuvent être déplacés alternativement par rapport à ceux de l'autre segment d'écouvillon.

19. Ecouvillon selon la revendication 17 avec deux segments d'écouvillon, **caractérisé en ce que** les directions préférentielles des deux segments d'écouvillon sont opposées l'une à l'autre.

20. Ecouvillon selon l'une quelconque des revendications 17 à 19 précédentes, **caractérisé par** un réservoir d'énergie pour l'alimentation en énergie autonome de l'écouvillon.
